(19) Europäisches Patentamt
European Patent Office
Office européen des brevets

(11) EP 4 815 256 A1

(12) EUROPEAN PATENT APPLICATION

(43) Date of publication:
**30.09.2026 Bulletin 2026/40**

(21) Application number: **25171810.2**

(22) Date of filing: **22.04.2025**

(51) International Patent Classification (IPC):
***H02J 13/00*** ***(2026.01)*** ***H02J 3/00*** ***(2026.01)***

(52) Cooperative Patent Classification (CPC):
**H02J 13/12; H02J 3/0012;** H02J 2103/30; H02J 2103/35

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.03.2025 US 202563779928 P**

(71) Applicant: **Hitachi Energy Ltd**
**8050 Zürich (CH)**

(72) Inventor: **CHATTERJEE, Paroma**
**26505 Morgantown (US)**

(74) Representative: **Vossius & Partner Patentanwälte Rechtsanwälte mbB**
**Siebertstraße 3**
**81675 München (DE)**

# (54) GRID RESILIENCY QUANTIFICATION USING MULTI-CRITERIA DECISION MODEL

(57) It is crucial to understand the impacts of extreme weather events on power grids. However, state-of-the-art metrics provide only limited insights on such impacts, and rely on data acquired during or after the event. Accordingly, embodiments quantify the resiliency of a power grid or other power network using a holistic set of metrics, that captures different types of resiliency, in advance of the event. In an embodiment, the quantification of resiliency may utilize a multi-criteria decision model to compute a probabilistic graph-based risk score and/or a probabilistic power-flow-based risk score. In an embodiment in which both risk scores are computed, an overall risk score may be computed as a combination of the two risk scores. The quantification of resiliency, in this manner, enables the resiliency of the power network to be proactively improved via pre-event control actions, which may implement appropriate resiliency measures.

Management System
110
Software
112
Database
114
Target System (e.g., Power System)
140
Network(s)
120
User System
130
Third-Party System
150

FIG. 1



EP 4 815 256 A1

**Description**

**BACKGROUND**

Field of the Invention

The embodiments described herein are generally directed to grid resiliency, and, more particularly, to proactively improving grid resiliency by quantifying grid resiliency using a multi-criteria decision model.

Description of the Related Art

The frequency of extreme weather events, such as hurricanes and blizzards, continues to increase. Understanding the risk that such events pose to existing energy infrastructure can help with the planning of control actions. Thus, it is crucial to understand the impact of weather events on all components of a power grid. It is also useful to understand which assets in a power grid are critical to maintaining generation and load balance to the best of the power grid's ability.

The impact of extreme events on a power grid can typically be envisioned as a resiliency trapezoid, in a plot of a resilience or performance metric over time. In a pre-event phase, the power grid operates normally at a first value of the performance metric. At the start of the extreme event, a disruption-transition phase begins, in which the performance metric declines from the first value to a second, lower value. During the disruption-transition phase, preventive actions are generally taken. This is followed by an outage phase, in which the performance metric remains around the second value, and during which corrective and emergency actions may be taken. The outage phase is followed by a critical-load-recovery phase, in which critical loads are recovered first by restorative actions. During, the critical-load-recovery phase, the performance metric increases from the second value to a third, higher value, which is still below the first value. The critical-load-recovery phase is followed by a self-recovery or initial-stable phase in which the performance metric remains around the third value, as restorative actions continue. This is followed by an infrastructure-recovery phase, in which the entire infrastructure is restored by the ongoing restorative actions, and in which the performance metric increases from the third value to the first value, such that normal operation is restored.

The performance metric that is used to quantify grid resiliency may consist of a probability metric, such as the probability of interruption (PI), an energy metric, such as energy not served (ENS), a time metric, such as the system average interruption duration index (SAIDI), or outage duration (OD), or the like. A comprehensive discussion of performance metrics can be found in E. Hossain, et al., "Metrics and enhancement strategies for grid resilience and reliability during natural disasters," Applied Energy, vol. 290, 2021, which is hereby incorporated herein by reference as if set forth in full. However, for any given extreme event, different performance metrics may imply different resiliency levels of the power grid. In addition, state-of-the-art performance metrics rely on event information (e.g., regarding damage to the power grid), and therefore, are only calculable during or after the extreme event, which does not enable the power grid to be hardened to the extreme event prior to the extreme event.

**SUMMARY**

Accordingly, systems, methods, and non-transitory computer-readable media are disclosed for proactively improving grid resiliency by quantifying grid resiliency using a multi-criteria decision model. An objective achievable by disclosed embodiments is the quantification of grid resiliency using a combination of a plurality of metrics. A further objective achievable by disclosed embodiments is the provision of a single risk score for the entire power grid. A further objective achievable by disclosed embodiments is the utilization of a probabilistic framework that computes a probabilistic risk score, in advance of a future event, using forecasted data.

In an embodiment, a method of improving resiliency of a power network comprises using at least one hardware processor to: in advance of a future event, quantify a resiliency of the power network by one or both of calculating a probabilistic graph-based risk score for the power network based on at least one graph-based metric and a failure probability for at least a first subset of a plurality of assets in the power network, or calculating a probabilistic power-flow-based risk score for the power network based on at least one power-flow-based metric for the power network in each of one or more topology configurations that are determined based on the failure probability of at least a second subset of the plurality of assets in the power network; and before or during the future event, control one or more of the plurality of assets in the power network to implement one or more resiliency measures based on the quantified resiliency of the power network.

Quantifying the resiliency of the power network may include calculating the probabilistic graph-based risk score, wherein the at least one graph-based metric is a plurality of graph-based metrics. Calculating the probabilistic graph-based risk score may comprise: for each asset in the at least a first subset of the plurality of assets, calculating the plurality of graph-based metrics for the power network for a scenario in which the asset is assumed to fail, and calculating a risk score for the asset based on the calculated plurality of graph-based metrics for the power network and respective entropy

weights for the plurality of graph-based metrics; and calculating the probabilistic graph-based risk score based on the calculated risk scores for the at least a first subset of the plurality of assets and respective critic weights for the at least a first subset of the plurality of assets, wherein the respective critic weight for each of the at least a first subset of the plurality of assets represents a criticality of that asset.

The risk score for each asset may be calculated as:

$$R_i = \left( \sum_j w_j^e r_{ij} \right) \times P_i^{fail}$$

$$w_j^e = \frac{1 - e_j}{\sum_{j=1}^{n} (1 - e_j)}$$

wherein $R_i$ is the risk score for asset i in the at least a first subset of the plurality of assets, $w_j^e$ is the respective entropy weight for graph-based metric *j*, $r_{ij}$ is a value of the graph-based metric *j* for asset i, $P_i^{fail}$ is the failure probability for asset *i*, $e_j$ is an entropy for graph-based metric *j*, and *n* is a total number of the plurality of graph-based metrics.

The entropy $e_j$ for graph-based metric *j* may be calculated as:

$$e_j = -\frac{1}{\ln(m)} \sum_{i=1}^{m} \gamma_{ij} \ \ln(\gamma_{ij})$$

$$\gamma_{ij} = \frac{r_{ij}}{\sum_{i=1}^{m} r_{ij}} \quad , \quad \sum_{i=1}^{m} \gamma_{ij} = 1$$

wherein ln() is a natural logarithm, m is a total number of assets in the at least a first subset of the plurality of assets, and $\gamma_{ij}$ is a normalized intensity metric for asset i and graph-based metric *j*.

The failure probability $P_{\alpha_i}^{fail}$ for asset *i* may be determined based on a fragility curve for asset *i*.

The probabilistic graph-based risk score may be calculated as:

$$R_{grid} = \sum_{i}^{m} w_i^{\rho} \times R_i$$

wherein $R_{grid}$ is the probabilistic graph-based risk score, *m* is a total number of assets in the at least a first subset of the plurality of assets, $w_i^{\rho}$ is the respective critic weight for asset *i* in the at least a first subset of the plurality of assets, and $R_i$ is the risk score for asset *i*.

Quantifying the resiliency of the power network may include calculating the probabilistic power-flow-based risk score, wherein the at least one power-flow-based metric is a plurality of power-flow-based metrics.

Quantifying the resiliency of the power network may include calculating the probabilistic power-flow-based risk score, wherein calculating the probabilistic power-flow-based risk score comprises: determining a graph of the power network, wherein each of the at least a second subset of the plurality of assets is represented as a node or edge in the graph; generating a plurality of topology configurations from the graph, wherein each of the plurality of topology configurations comprises the graph with at least one node or edge, representing an asset with a failure probability that satisfies one or more criteria, removed; calculating the at least one power-flow-based metric for each of the plurality of topology configurations; and calculating the probabilistic power-flow-based risk score based on the at least one power-flow-based metric calculated for the plurality of topology configurations. The one or more criteria may comprise a threshold. Calculating the at least one power-flow-based metric for each of the plurality of topology configurations may comprise: determining whether or not the topology configuration comprises an electrical island; when determining

that the topology configuration does not comprise any electrical island, calculating the at least one power-flow-based metric for the topology configuration; and when determining that the topology configuration comprises an electrical island, determine whether or not the electrical island contains any grid-forming resource, when determining that the electrical island does not contain any grid-forming resource, calculating the at least one power-flow-based metric for the topology configuration with the electrical island considered as lost, and when determining that the electrical island contains a grid-forming resource, when total load in the topology configuration is greater than total power generation, shedding loads until the total load is supported by the total power generation, and calculating the at least one power-flow-based metric for the topology configuration based on a value of the at least one power-flow-based metric for each of a plurality of sub-graphs of the graph in the topology configuration. Shedding loads may comprise shedding the loads in order from smallest load to largest load.

The at least one power-flow-based metric may comprise one or more of a loss of load index, critical load not lost, or energy availability index.

Each of the at least a first subset and the at least a second subset of the plurality of assets may comprise one or both of towers or power lines in the power network.

Quantifying the resiliency of the power network may comprise both calculating the probabilistic graph-based risk score and calculating the probabilistic power-flow-based risk score. Quantifying the resiliency of the power network may further comprise calculating an overall risk score based on a combination of the probabilistic graph-based risk score and the probabilistic power-flow-based risk score.

Controlling the one or more of the plurality of assets may comprise one or more of re-dispatching one or more power generators in the power network, curtailing one or more loads in the power network, or operating one or more switches in the power network to change a topology of the power network.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions (e.g., a computer program) stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which any of the processes described herein may be implemented, according to an embodiment;

FIG. 2 illustrates an example processing system, by which any of the processes described herein may be executed, according to an embodiment;

FIG. 3 illustrates an example data flow for improving resiliency of a target system, according to an embodiment;

FIG. 4 illustrates an example process for improving resiliency of a power network, according to an embodiment;

FIG. 5 illustrates an example subprocess for calculating a probabilistic graph-based risk score, according to an embodiment; and

FIG. 6 illustrates an example subprocess for calculating a probabilistic power-flow-based risk score, according to an embodiment.

## DETAILED DESCRIPTION

In an embodiment, systems, methods, and non-transitory computer-readable media are disclosed for improving grid resiliency by quantifying grid resiliency using a multi-criteria decision model. Currently, there exists no metric that quantifies the resiliency of a power grid to a future or "forecasted" event, such as a forecasted weather event, and particularly, a forecasted extreme weather event. This is due to the uncertainty of event forecasts, the complexity of power grids, and indecision as to which metric would provide the best representation of grid resiliency to a forecasted event. As a consequence, it is difficult to holistically assess the risk to a power grid, posed by a future event. A holistic assessment would allow the power grid to be hardened in advance of the future event, for improved grid resiliency during the future event.

After reading this description, it will become apparent to one skilled in the art how to implement the invention in various alternative embodiments and alternative applications. However, although various embodiments of the present

invention will be described herein, it is understood that these embodiments are presented by way of example and illustration only, and not limitation. As such, this detailed description of various embodiments should not be construed to limit the scope or breadth of the present invention as set forth in the appended claims.

## 1. Infrastructure

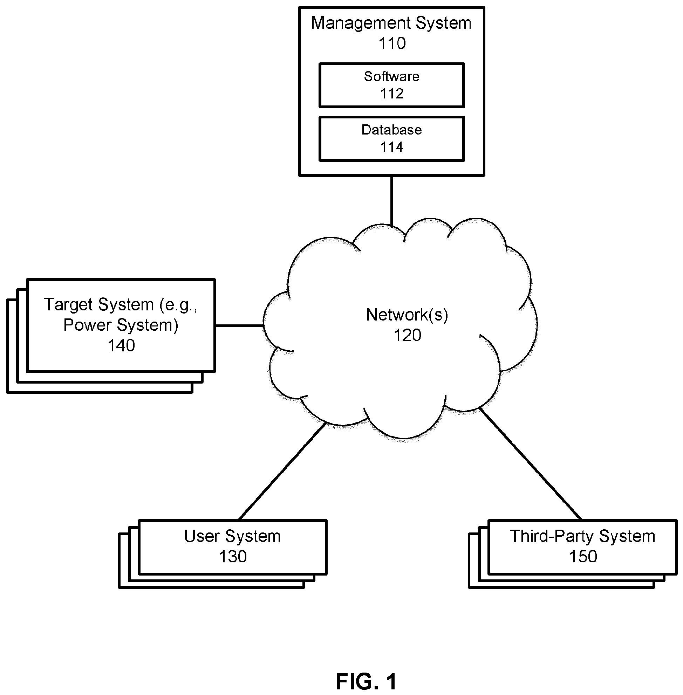

FIG. 1 illustrates an example infrastructure in which any of the disclosed processes may be implemented, according to an embodiment. The infrastructure may comprise a management system 110 (e.g., comprising one or more servers) that hosts and/or executes one or more of the various processes described herein, which may be implemented in software and/or hardware. Examples of management system 110 include, without limitation, a supervisory control and data acquisition (SCADA) system, a power management system (PMS), an energy management system (EMS), a distribution management system (DMS), an advanced DMS (ADMS), an asset management system (ASM), and the like. Management system 110 may comprise dedicated servers, or may instead be implemented in a computing cloud, in which the computational resources of one or more servers are dynamically and elastically allocated to multiple tenants based on demand. In either case, the servers may be collocated (e.g., in a single data center) and/or geographically distributed (e.g., across a plurality of data centers). Management system 110 may also comprise or be communicatively connected to software 112 and/or a database 114. In addition, management system 110 may be communicatively connected, via one or more networks 120, to one or more user systems 130, target systems 140, and/or third-party systems 150.

Network(s) 120 may comprise the Internet, and management system 110 may communicate with user system(s) 130, target system(s) 140, and/or third-party system(s) 150, through the Internet and/or other network using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While management system 110 is illustrated as being connected to various systems through a single set of network(s) 120, it should be understood that management system 110 may be connected to the various systems via different sets of one or more networks. For example, management system 110 may be connected to a subset of user systems 130, target systems 140, and/or third-party systems 150 via the Internet, but may be connected to one or more other user systems 130, target systems 140, and/or third-party systems 150 via an intranet. Furthermore, while only a few user systems 130, target systems 140, and third-party systems 150, one instance of software 112, and one database 114 are illustrated, it should be understood that the infrastructure may comprise any number of user systems 130, target systems 140, third-party systems 150, software instances 112, and databases 114.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a target system 140 can interact with management system 110. These interactions may comprise inputting data (e.g., parameters for configuring the processes described herein) and/or receiving data (e.g., the outputs of processes described herein) via a graphical user interface provided by management system 110 or a system between management system 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in database 114.

Target system(s) 140 may comprise any type of system for which data are monitored, analyzed, and/or acted upon. However, in the context of specific, non-limiting examples that are provided throughout the present disclosure, it will be assumed that target system 140 comprises or consists of a power system, and particularly, a power network, such as a power grid. A power network may comprise one or more, and generally a plurality of, power assets connected in a network, which may comprise a power distribution network, a power transmission network, a microgrid, and/or the like. The assets in a power network may comprise power resources, such as power generators, energy storage systems, electrical loads (e.g., rechargeable energy storage system or other controllable load, non-controllable load, etc.), and/or the like, as well as other types of power assets, such as transformers, inverters, branches or other lines, and/or any other electrical component supporting the power system. Power generators may comprise different types of power generators, such as thermal power plants (e.g., coal, natural gas, nuclear, geothermal, etc.), hydroelectric power plants, renewable resource power plants (e.g., solar, wind, geothermal, etc.), and/or the like. Electrical loads may comprise anything that consumes power, including, without limitation, electric vehicles, appliances, machines, commercial buildings, residential buildings, and/or the like.

Third-party system(s) 150 may comprise any type or types of computing devices capable of wired and/or wireless communication. However, it is generally contemplated that third-party system 150 would comprise one or more servers

that supply extrinsic data to management system 100. The extrinsic data may represent historical, current, and/or forecasted values of one or more parameters, relevant to target system 140, such as weather parameters (e.g., temperature, humidity, wind speed, pressure, etc.), market parameters (e.g., energy prices), socio-political events (e.g., protests, law-enforcement warnings, etc.) and/or the like.

Management system 110 may execute software 112, comprising one or more software modules that implement one or more of the disclosed processes. In addition, management system 110 may comprise, be communicatively coupled with, or otherwise have access to database 114 that stores the data input into and/or output from one or more of the disclosed processes. Any suitable database may be utilized in database 114, including without limitation MySQL™, Oracle™, IBM™, Microsoft SQL™, Access™, PostgreSQL™, MongoDB™, and/or the like, and including cloud-based databases, proprietary databases, and unstructured databases.

2. Example Processing Device

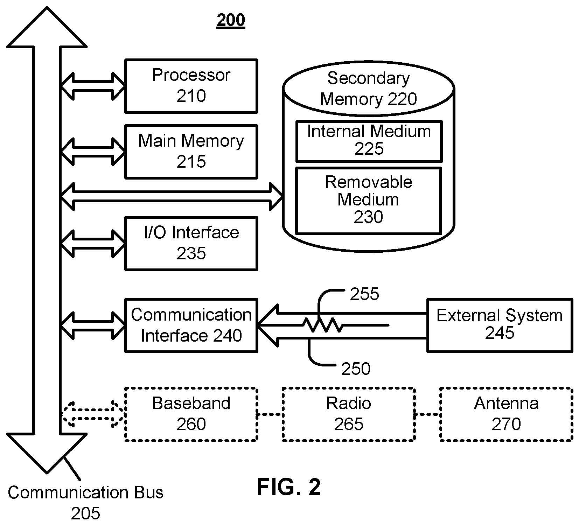

FIG. 2 is a block diagram illustrating an example wired or wireless system 200 that may be used in connection with various embodiments described herein. For example, system 200 may be used as or in conjunction with one or more of the functions, methods, or other processes (e.g., to store and/or execute software 112, store database 114, etc.) described herein, and may represent components of management system 110, user system(s) 130, target system(s) 140, third-party system(s) 150, and/or other processing devices described herein. System 200 can be a server, conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a processor subordinate to the main processor (e.g., back-end processor), an additional microprocessor or controller for dual or multiple processor systems, and/or a coprocessor. Such auxiliary processors may be discrete processors or may be integrated with a main processor 210. Examples of processors 210 which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 may be connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE), including IEEE 488 general-purpose interface bus (GPIB) or IEEE 696/S-100, and/or the like.

System 200 may comprise a main memory 215. Main memory 215 provides storage of instructions and data for programs executing on processor 210, such as one or more of the processes discussed herein (e.g., embodied in software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

System 200 may also comprise a secondary memory 220. Secondary memory 220 may optionally include an internal medium 225 and/or a removable medium 230. Internal medium 225 may comprise, for example, a hard disk drive (HDD), a solid state drive (SSD), and/or the like. Removable medium 230 may comprise, for example, a magnetic tape drive, a compact disc (CD) drive, a digital versatile disc (DVD) drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

System 200 may comprise an input/output (I/O) interface 235. I/O interface 235 provides an interface between one or more components of system 200 and one or more input and/or output devices. Example input devices include, without limitation, sensors, keyboards, touch screens or other touch-sensitive devices, cameras, biometric sensing

devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may comprise a communication interface 240. Communication interface 240 allows software and other data to be transferred between system 200 and external devices, networks, or other external systems 245. For example, data, which may include computer software or executable code, may be transferred to system 200 from external system 245 (e.g., a network server, personal computer, or other device) and/or from system 200 to external system 245, via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated services digital network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer programs (e.g., comprised in software 112), comprising computer-executable code or instructions, are stored in main memory 215 and/or secondary memory 220. Computer programs can also be received via communication interface 240 and stored in main memory 215 and/or secondary memory 220. The computer programs, when executed, enable system 200 to perform one or more of the processes described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), and any peripheral device communicatively coupled with communication interface 240, such as external system 245. These non-transitory computer-readable media are means for providing executable code, programming instructions, software, and/or other data to processor(s) 210.

System 200 may also include optional wireless communication components that facilitate wireless communication over a voice network and/or a data network (e.g., in the case of user system 130 that is a smart phone or other mobile device, a sensor and/or actuator within a target system 140, etc.). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive signal, which is sent from radio system 265 to baseband system 260.

Baseband system 260 is also communicatively coupled with processor(s) 210, which may have access to data storage areas 215 and 220. Thus, data, including computer programs, can be received from baseband processor 260 and stored in main memory 210 or in secondary memory 220, or executed upon receipt. Such computer programs, when executed, may enable system 200 to perform one or more of the disclosed processes.

## 3. Example Data Flow for Target System Management

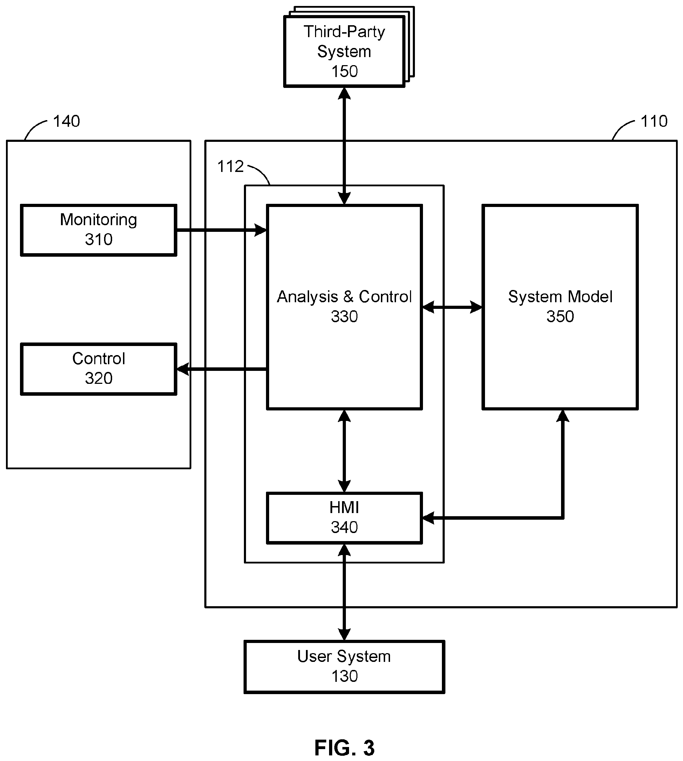

FIG. 3 illustrates an example data flow between a management system 110, a user system 130, a target system 140, and one or more third-party systems 150, according to an embodiment. Target system 140 may comprise a monitoring

module 310 and a control module 320. Software 112 of management system 110 may comprise an analysis and control module 330, and a human-to-machine interface (HMI) 340. Analysis and control module 330 may interact with or comprise a system model 350, which may be stored in database 114 of management system 110. It should be understood that communications between the various systems may be performed via network(s) 120. In addition, communications between a pair of modules may be performed via an application programming interface (API) provided by one of the modules or by other inter-process communication means.

Monitoring module 310 may monitor and collect data that are output by one or more sensors in target system 140 (e.g., sensors in a power network, such as a power grid). Monitoring module 310 may also otherwise derive data from the collected data. Monitoring module 310 may transmit or "push" the collected and/or otherwise derived data as system telemetry to analysis and control module 330 (e.g., via an API of analysis and control module 330). Alternatively, analysis and control module 330 may retrieve or "pull" the system telemetry from monitoring module 310 (e.g., via an API of monitoring module 310). The system telemetry may include measurements at each of one or more nodes (e.g., buses within a power system) or other points within a network of target system 140. The system telemetry may be communicated from monitoring module 310 to analysis and control module 330 in real time, as data are collected and/or otherwise derived, or periodically. As used herein, the term "real time" includes events that occur simultaneously, as well as events that are separated in time by ordinary delays resulting from latencies in processing, memory access, communications, and/or the like.

Analysis and control module 330 may receive the system telemetry from monitoring module 310, use the system telemetry in conjunction with system model 350 to determine a configuration for target system 140 (e.g., one or more resources or other assets in a power network), and then control target system 140 to transition to the determined configuration. In particular, analysis and control module 330 may generate control signals that are transmitted to control module 320 of target system 140. For example, the control signals may be sent via an API of control module 320. The control signals may be communicated from analysis and control module 330 of management system 110 to control module 320 of target system 140 in real time, as the system telemetry is received and analyzed, periodically (e.g., in advance of a sliding time window), or in response to a user operation. Analysis and control module 330 may control target system 140 automatically (e.g., without any user intervention), semi-automatically (e.g., requiring user approval or confirmation), and/or in response to manual user inputs.

Each third-party system 150 may supply extrinsic data to analysis and control module 330. Third-party system 150 may transmit or push the extrinsic data to analysis and control module 330 (e.g., via an API of analysis and control module 330). Alternatively, analysis and control module 330 may retrieve or pull the extrinsic data from third-party system 150 (e.g., via an API of third-party system 150). The extrinsic data may include any data that are utilized by analysis and control module 330 and that are not available from an intrinsic source, such as monitoring module 310 or database 114. The extrinsic data may comprise or consist of data that are exogenous to target system 140. In the context of target system 140 being a power network or other power system, the exogenous data may comprise one or more historical and/or forecast weather parameters, such as temperature, humidity, solar insolation, wind, barometric pressure, precipitation, alerts, and/or the like. In this case, third-party system 150 may comprise a weather service, such as the United States National Weather Service. As another example, the extrinsic data may comprise one or more historical and/or forecast market parameters, such as an energy price in a primary or ancillary services market. In this case, third-party system 150 may comprise an energy market in which energy is traded.

Analysis and control module 330 may receive intrinsic data from monitoring module 310 and/or database 114 and/or receive extrinsic data from one or more third-party systems 150, and derive the value of each of one or more input features from the received intrinsic and/or extrinsic data. The received data may itself comprise the value of an input feature, or the value of an input feature may be otherwise derived (e.g., calculated, inferred, interpolated, imputed, etc.) from the received data. Analysis and control module 330 may input the values of the input features into a system model 350, which may output values of a target.

Analysis and control module 330 may make decisions and/or perform operations on target system 140, based on the value of the target output by system model 350. As an example, analysis and control module 330 may utilize the value of the target to determine an optimal configuration of target system 140 at some future time. Based on this determination, analysis and control module 330 may automatically (i.e., without any user involvement), semi-automatically (e.g., with user approval or confirmation via human-to-machine interface 340), or manually (e.g., in response to a manual user request) initiate a control operation, to change a real-time or scheduled operation of target system 140, based on the optimal configuration. Initiation of the control operation may comprise transmitting control commands to control module 320 of target system 140, which may responsively control target system 140 according to the control commands.

Control module 320 of target system 140 receives the control signals from analysis and control module 330, and controls one or more components of target system 140 in accordance with the control signals. In the context of a power network, examples of such control include, without limitation, setting a setpoint (e.g., active and/or reactive power for power generators, voltage, etc.), adjusting the power output of a power generator, adjusting the charging or discharging of an energy storage system, adjusting the power that a load consumes, activating or deactivating a load, closing or opening

a switch (e.g., circuit breaker), and/or the like.

Of particular relevance to disclosed embodiments, analysis and control module 330 may quantify the resiliency of a power network of a target system 140. For instance, analysis and control module 330 may determine one or more risk scores that measure the resiliency of the power network against a future event, and particularly, a future extreme event, such as a forecasted extreme weather event. One or more decisions may be made based on the determined risk score(s), including whether or not to take one or more preventative control actions. These preventative control actions may implement one or more resiliency measures that are intended to harden the power network against the impacts of the future event. Examples of resiliency measures include, without limitation, load curtailment, network topology optimization, preemptive electrical islanding, distributed energy resource (DER) dispatch, preemptive hardening, and the like. The preventative control action(s), potentially implementing one or more resiliency measures, may comprise control of target system 140, by analysis and control module 330, via control module 320.

Human-to-machine interface 340 may generate a graphical user interface that is transmitted to user system 130 and receive inputs to the graphical user interface via user system 130. The graphical user interface may provide information regarding the current state of target system 140 determined from the system telemetry, a predicted state of target system 140 determined by analysis and control module 330, a configuration of target system 140 determined by analysis and control module 330, a control decision or recommendation for target system 140 determined by analysis and control module 330, and/or the like. Of particular relevance to disclosed embodiments, the graphical user interface may provide risk score(s), representing a quantification of the resiliency of a power network, with respect to a future event, such as a forecasted extreme weather event. In addition, the graphical user interface may provide inputs that enable a user of user system 130 to configure settings of analysis and control module 330, train, configure, test, and/or deploy system model 350, accept or reject decisions, or recommendations, specify, approve, and/or reject controls to be transmitted to control module 320 of target system 140, analyze target system 140, and/or the like.

System model 350 may be stored as a data structure in database 114 and accessed by modules, such as analysis and control module 330, via any known means (e.g., via an API of database 114, a direct query of database 114, etc.). For example, system model 350 may be loaded into memory (e.g., 215 and/or 220) from database 114 and executed by management system 110 as a service (e.g., as a microservice) that is accessible to analysis and control module 330 via an API. Management system 110 may provide an individual system model 350 for each target system 140 that is managed by management system 110, and/or a collective system model 350 that is used for two or more target systems 140. System model 350 may comprise or consist of a machine-learning algorithm or optimization algorithm that is trained or otherwise configured to compute a target from a set of input features for the power network, a network model representing a network topology of the power network represented by system model 350, a multi-criteria decision model, and/or the like.

## 4. Overall Process

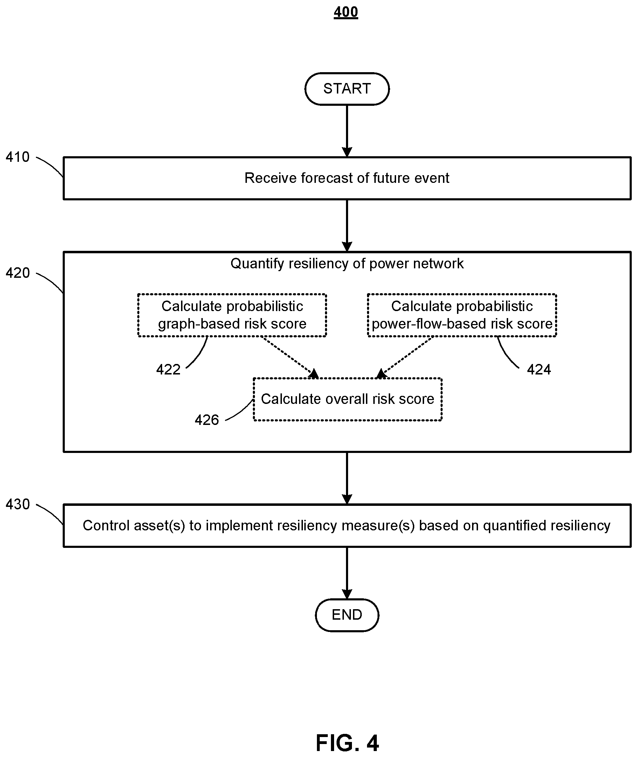

FIG. 4 illustrates an example process 400 for improving resiliency of a power network, according to an embodiment. Process 400 may be implemented by analysis and control module 330. While process 400 is illustrated with a certain arrangement and ordering of subprocesses, process 400 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

As used herein, the term "resiliency" refers to the ability of a power network or other target system 140 to withstand and recover from disruptions caused by an event, such as a weather event. In contrast to the state of the art, disclosed embodiments quantify this resiliency in advance of an event (i.e., a future event), as opposed to during or after the event. It should be understood that a future event is any event that is predicted or known to occur during a future time period, and for which at least one property (e.g., wind speed and/or precipitation rate for a storm) can be forecasted in advance. It is generally contemplated that the future event would be a forecasted weather event, and particularly, a forecasted extreme weather event, such as a hurricane, tornado, heat wave, blizzard, flood, drought, and/or the like. However, the forecasted weather event could be any type of weather event, including mild weather events, such as rain, snow, and/or the like. The future event could also comprise or consist of a non-weather event, such as a planned or expected protest, a terroristic or other criminal threat, a sporting or celebratory event, and/or the like. In any case, it is generally contemplated that the future event would be an event that starts at least several hours, and typically one or more days, in the future. However, as used herein, any event that starts in the future may be considered a "future event."

Initially, subprocess 410 receives a forecast of a future event that will impact a power network. It should be understood that this forecast is received in advance of the future event. The forecast may be received from database 114, a user system 130, a third-party system 150, or may be generated by software 112 (e.g., by analysis and control module 330). For example, in the case that the future event is a weather event, the forecast may be received from a weather service available on a third-party system 150. The forecast may identify the type of future event, one or more geographical areas (e.g., defined by coordinates of the Global Positioning System (GPS) or other Global Navigation Satellite System (GNSS),

one or more cities, one or more counties, one or more states, etc.) impacted by the future event, the value of each of one or more parameters (e.g., precipitation, windspeed, etc.) of the future event, and/or the like.

Subprocess 420 may quantify the resiliency of the power network, in advance of the future event. Subprocess 420 may comprise one or both of subprocess 422, which calculates a probabilistic graph-based risk score for the power network, or subprocess 424, which calculates a probabilistic power-flow-based risk score for the power network. The probabilistic graph-based risk score, which is described in greater detail elsewhere herein, may be based on at least one graph-based metric, and potentially a plurality of graph-based metrics, and a failure probability for at least a first subset of the plurality of assets in the power network. The power-flow-based risk score, which is also described in greater detail elsewhere herein, may be based on at least one power-flow-based metric, and potentially a plurality of power-flow-based metrics, for the power network in each of one or more, and generally a plurality of, topology configurations. The topology configuration(s) may be determined based on the failure probability of at least a second subset of the plurality of assets in the power network. It should be understood that the graph-based risk score and power-flow-based risk score are probabilistic at least by virtue of their respective uses of failure probabilities.

The first subset and the second subset of the plurality of assets, used for the probabilistic graph-based risk score and probabilistic power-flow-based risk score, respectively, may be the same as each other (e.g., coextensive) or different from each other (e.g., overlapping or non-overlapping). In addition, each subset may consist of only a portion of the plurality of assets or comprise all of the plurality of assets in the power network. For example, each subset may comprise or consist of those assets, from the plurality of assets in the power network, that are located within the geographical area(s) forecasted to be impacted by the future event (e.g., identified in the forecast received in subprocess 410).

In an embodiment in which subprocess 420 comprises both subprocesses 422 and 424, subprocess 420 may also comprise a subprocess 426, which calculates an overall risk score based on a combination of the probabilistic graph-based risk score and the probabilistic power-flow-based risk score. For example, the probabilistic graph-based risk score and the probabilistic power-flow-based risk score may be normalized to the same numerical scale (e.g., zero to one) and combined as a weighted average. In this case, the probabilistic graph-based risk score and the probabilistic power-flow-based risk score may each be assigned a respective weight, such that the sum of the weights is one. It should be understood that, if the weights are both 0.5, the weighted average becomes a simple arithmetic mean, whereas if the weights are different, the risk score with the higher weight will contribute more to the overall risk score than the risk score with the lower weight. The weights may be a system setting (e.g., based on experimentation), a user setting (e.g., specified by an operator of the power network), a user setting with a system default setting, or the like.

In an embodiment of subprocess 420 that comprises subprocesses 422, 424, and 426, the output of subprocess 420 may comprise the overall risk score, calculated by subprocess 426, and optionally, the probabilistic graph-based risk score, calculated by subprocess 422, and/or the probabilistic power-flow-based risk score, calculated by subprocess 424. In an embodiment of subprocess 420 that consists of only subprocess 422, the output of subprocess 420 may comprise or consist of the probabilistic graph-based risk score, calculated by subprocess 422. Similarly, in an embodiment of subprocess 420 that consists of only subprocess 424, the output of subprocess 420 may comprise or consist of the probabilistic power-flow-based risk score, calculated by subprocess 424.

Subprocess 430 may control one or more of the plurality of assets in the power network, to implement one or more resiliency measures based on the quantified resiliency of the power network, output by subprocess 420. It should be understood that subprocess 430 may be performed before or during the future event. Whether subprocess 430 is performed before the future event or during the future event may depend on the particular resiliency measure(s) being implemented.

The resiliency measure(s), implemented by subprocess 430, may comprise or consist of load curtailment, network topology optimization, preemptive electrical islanding, DER dispatch, preemptive hardening and/or the like. Load curtailment refers to the deactivation or disconnection (e.g., by opening one or more switches) of one or more loads from the power network, such the power network no longer supplies power to the load(s). Network topology optimization refers to reconfiguring the network topology of the power network (e.g., by opening or closing each of one or more switches) to minimize the impact of the future event on the power network (e.g., by rerouting power through less vulnerable power lines). Preemptive electrical islanding refers to forming one or more electrical islands in the power network (e.g., by opening or closing each of one or more switches), before or during the event, to minimize the impact of the event. DER dispatch refers to adjusting setpoints for power generators in the power network, placing new distributed energy resources within the power network, and/or the like, before or during the event, to minimize outages in the power network during the event. Preemptive hardening refers to hardening at least one asset (e.g., asset(s) with higher risk or criticality) in the power network in advance of the event (e.g., by scheduling repairs or renovations of the asset(s) in advance of the event).

## 5. Graph-Based Risk Score

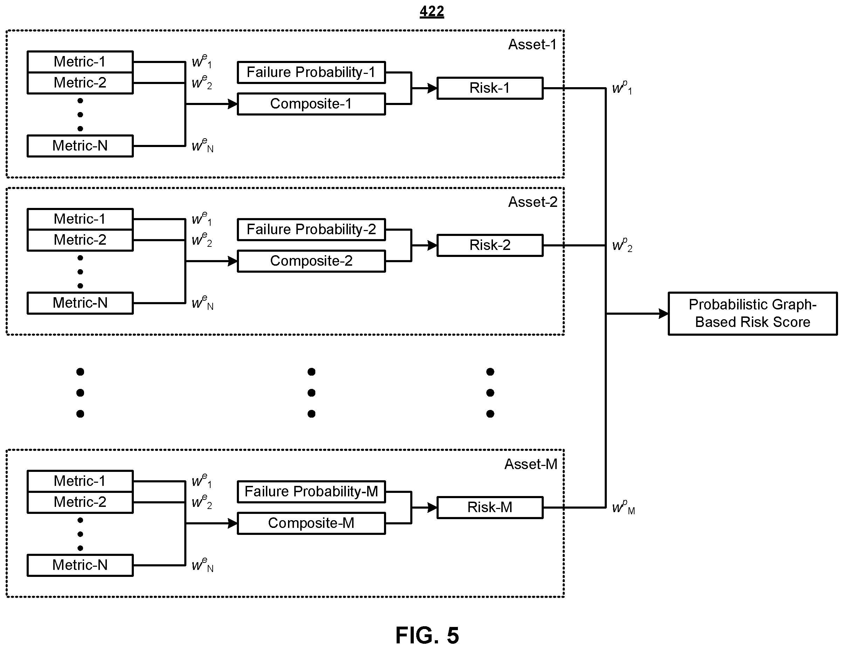

FIG. 5 illustrates an example of subprocess 422 for calculating a probabilistic graph-based risk score, according to an embodiment. Subprocess 422 may be implemented by analysis and control module 330. While subprocess 422 is

illustrated with a certain arrangement and ordering of components, subprocess 422 may be implemented with fewer, more, or different components and a different arrangement and/or ordering of components. In addition, it should be understood that any component, which does not depend on another component, may be determined before, after, or in parallel with that other independent component, even if the components are described or illustrated in a particular order.

A power network may be represented as a graph, which may be one fully connected graph or a set of a plurality of connected graphs. In particular, assets representing connection points (e.g., buses or towers) for power generators, loads, substations, power lines, and/or the like may be represented as equivalent nodes in the graph, and assets representing connections (e.g., power lines) between those connection points may be represented as edges in the graph. In an embodiment, subprocess 422 utilizes a graph of the power network to generate the risk score, and particularly, uses the connectivity information in the graph. Thus, this risk score is referred to herein as a "graph-based risk score."

As mentioned above, the probabilistic graph-based risk score may be based on one or more graph-based metrics, and a failure probability for at least a first subset of the plurality of assets in the power network. In the illustrated example, it is assumed that the probabilistic graph-based risk score is based on N graph-based metrics, denoted as Metric-1, Metric-2, ..., Metric-N. In addition, it is assumed that there are M assets, in the at least a first subset of the plurality of assets in the power network, denoted as Asset-1, Asset-2, ..., Asset-M.

For each asset in the at least a first subset of the plurality of assets, which may potentially be all of the plurality of assets in the power network, the plurality of graph-based metrics are calculated for the power network for a scenario in which the asset is assumed to fail during the future event. In particular, the graph of the power network may be modified to remove the asset that is assumed to fail (e.g., remove a node or edge representing the asset that is assumed to fail), and the plurality of graph-based metrics may be calculated for the power network represented by the modified graph. Again, since each of these metrics is calculated using the connectivity information in a graph of the power network, they are referred to herein as "graph-based metrics." It should be understood that there will be at least one scenario for each of the M assets, and N graph-based metrics will be calculated for each of the scenarios. In other words, a total of M$\times$N metrics will be calculated. For example, Metric-1, Metric-2, ..., Metric-N are calculated for each of a plurality of scenarios in which respective ones of Asset-1, Asset-2, ..., Asset-M are assumed to fail during the future event.

In addition, for each asset in the at least a first subset (e.g., Asset-1, Asset-2, ..., Asset-M) of the plurality of assets, which again may potentially be all of the plurality of assets in the power network, a risk score for the asset is calculated based on the calculated plurality of graph-based metrics for the power network and respective entropy weights $w^e$ for the plurality of graph-based metrics. In particular, for each asset, the plurality of graph-based metrics may be combined into a composite value, denoted as Composite-1, Composite-2, ..., Composite-M, based on the entropy weights $w^e$ for the plurality of graph-based metrics. For example, each composite value may be a sum of the products of the value of each of the plurality of graph-based metrics with the respective entropy weight $w^e$ for that graph-based metric.

In an embodiment, the entropy $e_j$ for graph-based metric $j$, $j \in N$, is calculated as:

$$e_j = -\frac{1}{\ln(m)} \sum_{i=1}^{m} \gamma_{ij} \ln(\gamma_{ij}).$$

$$\gamma_{ij} = \frac{r_{ij}}{\sum_{i=1}^{m} r_{ij}} \quad , \quad \sum_{i=1}^{m} \gamma_{ij} = 1$$

wherein ln() is a natural logarithm, m is a total number of assets in the at least a first subset of the plurality of assets, $\gamma_{ij}$ is a normalized intensity metric for asset $i$, $i \in$ M, and graph-based metric $j$, and $r_{ij}$ is a value of the graph-based metric $j$ for asset $i$. The normalized intensity metrics $\gamma$, and thereby the entropies e, may differ for different types of future events.

In an embodiment, the entropy weight $w_j^e$ for graph-based metric $j$ is calculated as:

$$w_j^e = \frac{1 - e_j}{\sum_{j=1}^{n}(1 - e_j)}$$

wherein $n$ is a total number of the plurality of graph-based metrics.

In an embodiment, the composite value (e.g., Composite-1, Compoiste-2, ..., Composite-M) for each asset $i$ may be computed as:

$$\sum_j w_j^e r_{ij}$$

In an embodiment, for each asset in the at least a first subset (e.g., Asset-1, Asset-2, ..., Asset-M) of the plurality of assets, which again may potentially be all of the plurality of assets in the power network, a failure probability is computed, denoted as Failure Probability-1, Failure-Probability-2, ..., Failure Probability-M. A failure probability for an asset represents the probability that the asset will fail during the future event. The failure probability for each of the plurality of assets may be determined based on a fragility curve for the asset and/or a type of the future event. A failure probability may be obtained using the disclosure in M. Panteli, et al., "Power system resilience to extreme weather: Fragility modeling, probabilistic impact assessment, and adaptation measures," IEEE Transactions on Power Systems, vol. 32, no. 5, pp. 3747-3757, 2017, which is hereby incorporated herein by reference as if set forth in full. Each asset or each type of asset may be associated with one fragility curve, or a plurality of fragility curves representing different events or types of events. In the latter case, a single fragility curve may be selected based on the type of future event for which the resiliency of the power network is to be evaluated.

In an embodiment, the failure probability $P_i^{fail}$ for asset *i* is calculated as:

$$P_i^{fail} = f(\rho_i, S_i)$$

wherein $\rho_i$ are design parameters (e.g., age, height, material strength, etc.) associated with asset *i*, and $S_i$ are disaster strength parameters (e.g., wind speed, temperature, precipitation, snow accumulation, etc.) for asset *i*.

The risk score for each of the at least a first subset of the plurality of assets may be calculated based on the composite value (e.g., Composite-1, Composite-2, ..., Composite-M) and the failure probability (e.g., Failure Probability-1, Failure-Probability-2, ..., Failure Probability-M) for that asset. The resulting risk scores are denoted as Risk-1, Risk-2, ..., Risk-M. For example, the risk score for an asset may be calculated as a product of the composite value and failure probability for that asset. In an embodiment, the risk score $R_i$ for asset *i*, in the at least a first subset of the plurality of assets, is calculated as:

$$R_i = \left(\sum_j w_j^e r_{ij}\right) \times P_i^{fail}$$

The probabilistic graph-based risk score may be calculated based on the calculated risk scores (e.g., Risk-1, Risk-2, ..., Risk-M) for the at least a first subset of the plurality of assets and respective critic weights $w^\rho$ for the at least a first subset of the plurality of assets. The respective critic weight for each asset may represent the criticality of that asset. Each node and/or edge in the graph may be weighted according to the criticality of the asset represented by that node and/or edge (e.g., if a node represents a substation, a node has distributed energy resources, etc.). Metrics that may be used to quantify the criticality of an asset that is represented as a node (e.g., a bus or tower) include, without limitation, betweenness centrality, eigen-vector centrality, percolation centrality, Laplacian centrality, and/or the like. Metrics that may be used to quantify the criticality of an asset that is represented as an edge (e.g., a power line) include, without limitation, bridgedness index, load centrality, stress centrality, diversity centrality, and/or the like. It should be understood that each of these different metrics encapsulate different information about an asset.

In an embodiment, the probabilistic graph-based risk score is calculated as:

$$R_{grid} = \sum_i^m w_i^\rho \times R_i$$

wherein $R_{grid}$ is the probabilistic graph-based risk score, m is a total number of assets in the at least a first subset of the plurality of assets, $w_i^\rho$ is the respective critic weight for asset *i* in the at least a first subset of the plurality of assets, and $R_i$ is the risk score for asset *i*.

In an embodiment, the critic weight $w_i^\rho$ for asset *i* is calculated as:

$$w_i^{\rho} = \frac{\beta_i}{\sum_{k=1}^{m} \beta_k}, \ \beta_i = \sigma_i \sum_{k=1}^{m} (1 - \rho_{i,k})$$

$$\rho_{i,k} = \frac{\sum_j (r_{ij} - \bar{r}_i)(r_{kj} - \bar{r}_k)}{\sqrt{\sum_j (r_{ij} - \bar{r}_i)^2 (r_{kj} - \bar{r}_k)^2}}, \ i,k = 1,2, \ \cdots, m$$

wherein $\beta_i$ is the information variable for asset *i*, $\beta_k$ is information variable for asset k, $\sigma_i$ is the standard deviation of each graph-based metric for asset *i*, $\rho_{i,k}$ is the Pearson correlation coefficient, which quantifies the correlation in the graph-based metrics between assets *i* and *k*, $r_{ij}$ is the value of graph-based metric *j* for asset *i*, $r_{kj}$ is the value of graph-based metric *j* for asset *k*, $\bar{r}_i$ is the mean value of all graph-based metrics for asset *i*, and $\bar{r}_k$ is the mean value of all graph-based metrics for asset *k*.

At a high level, the probabilistic graph-based risk score is computed using a multi-criteria decision model (MCDM), based on the entropy method, as described in I. Mukhametzyanov, "Specific character of objective methods for determining weights of criteria in mcdm problems: Entropy, CRITIC and SD," Decision Making: Applications in Management and Engineering, vol. 4, p. 76-105, Jun. 2021, which is hereby incorporated herein by reference as if set forth in full, and the Criteria Importance Through Inter-criteria Correlation (CRITIC) method, as described in D. Diakoulaki, et al., "Determining objective weights in multiple criteria problems: The critic method," Computers & Operations Research, vol. 22, no. 7, pp. 763-770, 1995, which is also hereby incorporated herein by reference as if set forth in full. Firstly, the multi-criteria decision model computes the asset-level risk from a plurality of graph-based metrics using the entropy method and based on the failure probability of each asset (e.g., determined from fragility curves). The multi-criteria decision model then determines the weights of each asset, based on the criticality of each asset, and produces a final, single probabilistic graph-based risk score from the asset-level risks, using the CRITIC method.

6. Power-Flow-Based Risk Score

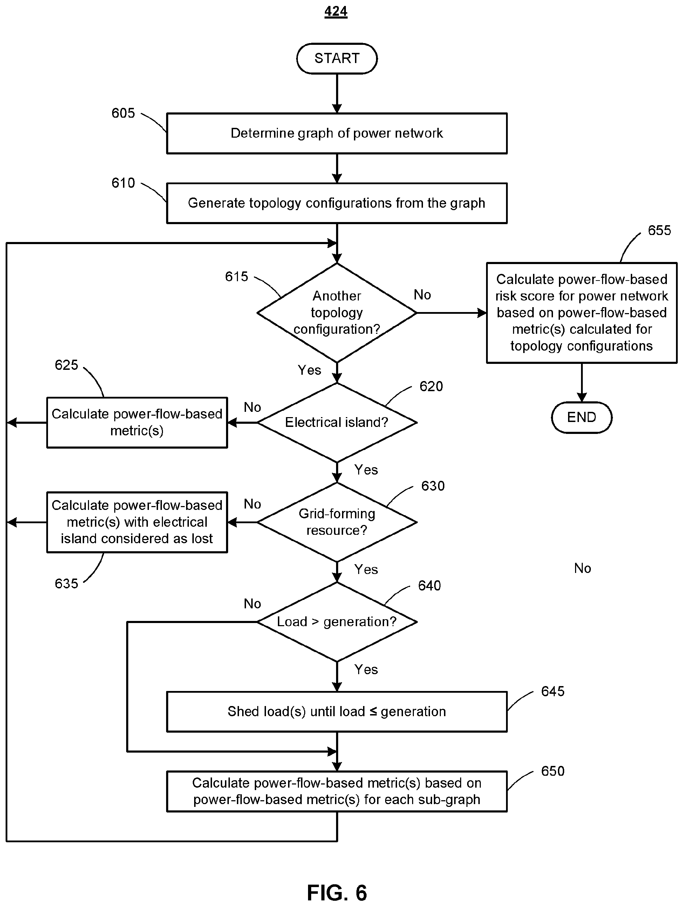

FIG. 6 illustrates an example of subprocess 424 for calculating a probabilistic power-flow-based risk score, according to an embodiment. Subprocess 424 may be implemented by analysis and control module 330. While subprocess 424 is illustrated with a certain arrangement and ordering of subprocesses, subprocess 424 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

As mentioned above, the power-flow-based risk score may be based on one or more power-flow-based metrics and one or more topology configurations that are determined based on the failure probability of at least a second subset of the plurality of assets in the power network. This risk score and these metrics are referred to herein as "power-flow-based," because they are calculated based on power flow analyses of the power network while having particular topology configurations. It should be understood that a topology configuration defines the configuration of the network topology of the power network, including, for example, the status (e.g., open or closed) of one or more switches in the power network, the status of one or more assets (e.g., normal operation, failed, etc.) in the power network, the connectivity between two or more assets (e.g., connected or disconnected), and/or the like. A topology configuration may be represented as a graph of the power network, in which connected assets are connected by edges, disconnected assets are not connected by edges, failed assets are removed, and/or the like.

Initially, in subprocess 605, a graph of the power network may be determined. This graph may be generated in the same manner as discussed elsewhere herein, for example, with respect to calculating the probabilistic graph-based risk score. In practice, the same graph may be used for the calculation of both the probabilistic graph-based risk score and the probabilistic power-flow-based risk score. In this case, the graph may be generated once for the power network and persistently stored in system model 350 for subsequent retrieval and use by subprocesses 422 and/or 424, as well as other processes. Thus, subprocess 605 may comprise either generating or retrieving the graph. In any case, each of the at least a second subset of the plurality of assets may be represented as a node or edge in the graph.

Subprocess 610 may generate a plurality of topology configurations from the graph that was determined in subprocess 605. Each of the plurality of topology configurations may comprise the graph with at least one node or edge, representing an asset with a failure probability that satisfies one or more criteria, removed. The failure probability for each asset may be determined using a fragility curve associated with the asset and/or event type, as discussed elsewhere herein. The removal of a node or edge in the graph may create one or more islands within the graph. In other words, the

removal of a node or edge may split the graph into a plurality of sub-graphs. In an embodiment, the plurality of topology configurations are generated to comprise or consist of a topology configuration for each of the plurality of assets, in the at least a second subset of the plurality of assets in the power network, for which the failure probability satisfies the one or more criteria. The topology configuration for a given asset may consist of the graph of the power network with just the node or edge, representing that asset, removed (e.g., flagged with a failed status).

The one or more criteria may comprise or consist of a threshold, such that the failure probability for an asset satisfies the one or more criteria when the value of the failure probability is greater than or equal to the threshold, and does not satisfy the one or more criteria when the value of the failure probability is less than the threshold. As an example in which the failure probability is normalized on a scale from zero to one, the threshold may be 0.60, 0.65, 0.70, 0.75, 0.80, 0.85, 0.90, 0.95, values therebetween, or the like.

Subprocess 615 may determine whether or not another topology configuration, from the plurality of topology configurations generated in subprocess 610, remains to be considered. In particular, subprocesses 615-650 may iterate through each of the plurality of topology configurations that were generated in subprocess 610. When no more topology configurations remain to be considered (i.e., "No" in subprocess 615), subprocess 424 may proceed to subprocess 655. Otherwise, when another topology configuration remains to be considered (i.e., "Yes" in subprocess 615), subprocess 424 may select the next topology configuration to be considered and proceed to subprocess 620.

Over these iterations, formed by subprocesses 615-650, at least one power-flow-based metric is calculated for each of the plurality of topology configurations generated in subprocess 610. Examples of power-flow-based metrics include, without limitation, critical load not lost (CLNL), loss of load index (LOLI), megawatt availability index (MWAI), critical load demand (CLD), load shed (i.e., the amount of load that is shed), distributed energy resources turned on, and the like. Critical load not lost indicates the proportion of critical load remaining in operation in the power network. The loss of load index indicates the amount of critical load that cannot be supported by existing power generation in the power network, either due to loss of connections or the lack of generation capacity. The megawatt availability index indicates the total power generation available to supply power to the critical loads connected to the power network or an islanded sub-network. Notably, with the increase in the number of grid-forming distributed energy resources that have been deployed, the energy available to serve loads has increased dramatically, even during extreme events. Critical load demand indicates the critical load demand capacity that is not affected by the event, with higher values indicating lower impact on the power network by the event. Notably, critical load demand is not a controllable factor, since it is dictated by customer demand, which is not within the operator’s control. One or a plurality of these and/or other power-flow-based metrics may be calculated for each topology configuration.

Subprocess 620 may determine whether or not the selected topology configuration contains at least one electrical island. It should be understood that an electrical island is formed within a topology configuration whenever there is a set of one or more assets, represented as nodes and/or edges in the graph of the power network, that are not directly or indirectly connected (e.g., by one or more nodes and/or edges) to a substation of the power network. The presence of electrical island(s) within the selected topology configuration may be detected by searching the graph of the power network for disconnected sub-graphs, using any suitable search algorithm known in the art. When there are no electrical islands within the selected topology configuration (i.e., "No" in subprocess 620), subprocess 424 may proceed to subprocess 625. Otherwise, when there is at least one electrical island within the selected topology configuration (i.e., "Yes" in subprocess 620), subprocess 424 may proceed to subprocess 630.

When determining that the selected topology configuration does not comprise any electrical island (i.e., "No" in subprocess 620), subprocess 625 may calculate the at least one power-flow-based metric for the selected topology configuration. In particular, subprocess 625 may perform an alternating current (AC) optimal power flow (OPF) analysis on the full graph of the power network. The output of the AC-OPF analysis may be a set of control parameters that optimizes power flow, within the power network having the selected topology configuration. Subprocess 625 may then calculate one or more power-flow-based metrics based on operation of the power network, having the selected topology configuration, according to the set of control parameters.

When determining that the selected topology configuration comprises an electrical island (i.e., "Yes" in subprocess 620), subprocess 630 may determine whether or not the electrical island contains any grid-forming resource. In particular, subprocess 424 may have access to the locations of each grid-forming resource (e.g., distributed energy resource (DER)) within the power network. It should be understood that grid-forming resources, like any other asset in the power network, may be represented as respective nodes in the graph of the power network. Thus, subprocess 630 may simply determine that the electrical island contains a grid-forming resource when a node, representing a grid-forming resource, is present within the sub-graph representing the electrical island, and determine that the electrical island does not contain a grid-forming resource when no node, representing a grid-forming resource, is present within the sub-graph representing the electrical island. When determining that the electrical island does not contain a grid-forming resource (i.e., "No" in subprocess 630), subprocess 424 may proceed to subprocess 635. Otherwise, when determining that the electrical island does contain a grid-forming resource (i.e., "Yes" in subprocess 630), subprocess 424 may proceed to subprocess 640.

When determining that the electrical island does not contain any grid-forming resource (i.e., "No" in subprocess 630), subprocess 635 may calculate the at least one power-flow-based metric for the selected topology configuration with the electrical island considered as lost. In other words, all loads in the electrical island are considered as experiencing a power outage, and the AC-OPF analysis is only performed on the remaining sub-graph of the power network (e.g., the graph with the electrical island removed). Subprocess 635 may calculate one or more power-flow-based metrics based on operation of the power network, having the selected topology configuration, minus the sub-graph representing the electrical island, according to the set of control parameters output by the AC-OPF analysis.

When determining that the electrical island contains a grid-forming resource (i.e., "Yes" in subprocess 630), subprocess 640 may determine whether or not the total load in the selected topology configuration is greater than total power generation in the selected topology configuration. This determination may be performed for both the sub-graph that contains a substation of the power network and the sub-graph that represents the electrical island containing the grid-forming resource. When determining that the total load in the selected topology configuration is greater than the total power generation (i.e., "Yes" in subprocess 640), subprocess 424 may proceed to subprocess 645. Otherwise, when determining that the total load in the selected topology configuration is less than or equal to the total power generation (i.e., "No" in subprocess 640), subprocess 424 may proceed to subprocess 650.

When determining that the total load in the selected topology configuration is greater than total power generation (i.e., "Yes" in subprocess 640), subprocess 645 may shed load(s) until the total load is supported by the total power generation. In an embodiment, the loads may be shed according to a priority, with lower priority loads shed before higher priority loads. For example, the loads may be shed in order from smallest load to largest load. Alternatively, the loads may be shed in order from least critical load to most critical load. It should be understood that the load shedding will typically be limited to the electrical island. In other words, loads will be shed until total power generation in the electrical island (e.g., from the grid-forming resource contained within the electrical island) is greater than or equal to total load in the electrical island. However, load(s) may also be shed within the sub-graph that contains a substation of the power network, in the event that total load in this sub-graph is greater than total power generation. It should be understood that, at this point, no loads are actually being curtailed. Rather, the selected topology configuration is being prospectively modified, to reflect an assumed curtailment, for the purposes of AC-OPF analysis and computing the power flow metrics for the particular sub-graph formation.

When determining that the electrical island contains a grid-forming resource (i.e., "Yes" in subprocess 630), subprocess 650 may calculate the at least one power-flow-based metric for the selected topology configuration based on a value of the at least one power-flow-based metric for each of a plurality of sub-graphs of the graph in the selected topology configuration. In other words, the graph of the power network, in the selected topology configuration, will comprise at least two, and potentially more, sub-graphs, with one sub-graph containing a substation of the power network, and at least one other sub-graph representing the electrical island and containing a grid-forming resource. The AC-OPF analysis may be performed for each of this plurality of sub-graphs, and one or more power-flow-based metrics may be calculated, for each of the plurality of sub-graphs, based on the operation of the respective sub-graph, having the selected topology configuration, according to the set of control parameters output by the AC-OPF analysis for the respective sub-graph. The resulting values of each power-flow-based metric for each of the plurality of sub-graphs may then be combined into a single value for that power-flow-based metric, representing the value of the power-flow-based metric for the entire power network.

It has generally been assumed in the above description that a given topology configuration would have, at most, only a single electrical island. However, this is not a requirement of any embodiment. In the event that a topology configuration comprises a plurality of electrical islands, the determination in subprocesses 630 may be performed for each of the plurality of electrical islands. Each electrical island that does not contain a grid-forming resource will be considered as lost. Each electrical island that does contain a grid-forming resource will be evaluated by subprocess 640, with potential load shedding by subprocess 645. For each sub-graph that does not represent a lost electrical island, the AC-OPF analysis may be performed for the portion of the power network represented by that sub-graph, and the power-flow-based metric(s) may be calculated based on the results of the AC-OPF analysis. Then, for each power-flow-based metric, the value of that power-flow-based metric for each sub-graph, that does not represent a lost electrical island, may be combined into a single value of that power-flow-based metric for the entire graph.

Subprocess 655 may calculate the probabilistic power-flow-based risk score based on the at least one power-flow-based metric calculated for the plurality of topology configurations. As discussed elsewhere herein, the at least one power-flow-based metric may comprise one or more of a loss of load index, critical load demand, critical load not lost, energy availability index (e.g., megawatt availability index), and/or the like. Subprocess 655 may, for each power-flow-based metric, combine the values of the power-flow-based metric across all of the plurality of topology configuration, in any suitable manner, to produce a single overall value of the power-flow-based metric. For instance, the values of a power-flow-based metric may be combined using the CRITIC method, described elsewhere herein. In particular, the single overall value of the power-flow-based metric may be calculated as a weighted combination of the values of the power-flow-based metric for the plurality of topology configurations, wherein the value of the power-flow-based metric for a given topology

configuration is weighted according to the criticality of the asset that is assumed to fail in that topology configuration. In an embodiment, in which only a single power-flow-based metric is calculated, this single overall value of the power-flow-based metric may be used as the probabilistic power-flow-based risk score. In an alternative embodiment, in which a plurality of power-flow-based metrics are calculated, the single overall values of all of the plurality of power-flow-based metrics may be aggregated into the probabilistic power-flow-based risk score using any suitable aggregation algorithm.

Essentially, subprocess 424 calculates the power-flow-based risk metric(s) based on an AC-OPF analysis performed on each of a plurality of topology configurations, and then calculates the probabilistic power-flow-based risk score, which quantifies an overall risk to the power network by the future event, based on the calculated power-flow-based risk metric(s) for the plurality of topology configurations. The probabilistic nature of the power-flow-based risk score is achieved by generating the plurality of topology configurations to represent likely failure scenarios during the future event, using the failure probabilities of the assets of the power network.

An embodiment of an algorithm for subprocess 424 is illustrated below. In the illustrated algorithm, the failure probability is used to initially check which assets have the highest failure probabilities. Each of these assets is removed from the graph of the power network, to generate a topology configuration, representing a potential failure scenario during the future event. Next, the algorithm checks for electrical islands formed in each topology configuration. If electrical islands are formed, the algorithm checks if each electrical island has a grid-forming resources to sustain the electrical island. If so, an AC optimal power flow is computed for each electrical island with a grid-forming resource or which is connected to the substation. If an electrical island does not have a grid-forming resource and is not connected to the substation, the electrical island is considered lost. The final results of the AC optimal power flows are evaluated to produce the power-flow-based metric(s) for each topology configuration, which are then combined into the probabilistic power-flow-based risk score for the power network and future event.

```
Input:
    G: graph of power network
    PFAIL_N(): failure probability of node (e.g., buses or towers)
    PFAIL_E(): failure probability of edge (e.g., power lines)
    Thresh: threshold for failure probability (e.g., 0.75)
    T: time period of the future event
    Locations of grid-forming resources (e.g., DERs)
    Locations of critical loads
```

```
Output: Power-flow-based metric(s), such as CLNL, LOLI, MWAI, load shed,
DERs turned on, and/or the like
```

```
while t ≤ T do
    if PFAIL_N(t) ≥ Thresh then
        Remove the node
        Check G for islands formed
        Save sub-graphs
    else if PFAIL_E(t) ≥ Thresh then
```

```
        Remove the edge
        Check G for islands formed
        Save sub-graphs
    else
        Save graph as sub-graph
    end
    if islands formed then
        Check each island for grid-forming resources
        if grid-forming resources present then
            if load is more than generation then
                Shed smallest load first till loads supportable by
generation
            end
            Run optimal power flow for sub-graphs
            Adjust resources accordingly
            Calculate power-flow-based metric(s)
        else
            Save island(s) as lost
            Calculate power-flow-based metric(s)
        end
    else
        Run optimal power flow for sub-graph
        Calculate power-flow-based metric(s)
    end
Calculate power-flow-based risk score based on all power-flow-based metrics
end
```

The power-flow-based metric(s) for each topology configuration may be calculated based on the sustainable islands formed (i.e., islands with grid-forming resources) and/or the critical load that is sustained. The sustainable islands formed may be determined from the locations of grid-forming distributed energy resources and the failure probabilities for the assets in the at least a second subset of the plurality of assets of the power network. The critical load that is sustained may be determined from the locations of the critical loads, the locations of the distributed energy resources, and the failure probabilities for the assets in the at least a second subset of the plurality of assets of the power network.

7. Example Embodiment

Disclosed embodiments utilize a multi-criteria decision model to more holistically quantify grid resiliency, and particularly, a risk metric, in advance of a future event, such as a forecasted extreme weather event. In an embodiment, quantifying resiliency of a power network comprises both calculating the probabilistic graph-based risk score and calculating the probabilistic power-flow-based risk score. Each of these two probabilistic risk scores quantifies a different type of resiliency of the power network to the future event. For instance, the probabilistic graph-based risk score may quantify the risk to individual assets, as well as the survivability of the overall power network (e.g., in terms of the grid connectivity being lost), during the future event. Advantageously, the probabilistic graph-based risk score captures multiple information about grid connectivity and other properties of the power network, preferably using a plurality of graph-based metrics, and is able to assign varying importance to different ones of the graph-based metrics, using the multi-

criteria decision model. On the other hand, the probabilistic power-flow-based risk score may quantify the performance of the power network, for example, in terms of how much of the critical loads can be served in the worst-case scenario, as well as the loss of power availability (e.g., due to factors such as shading of solar panels caused by ice accumulation during ice storms). An overall risk score may be calculated as a combination (e.g., weighted average) of these two probabilistic risk scores, to effectively convey both types of resiliency in a single score.

The probabilistic graph-based risk score, probabilistic power-flow-based risk score, and/or overall risk score may provide operators of the power network with crucial insights into the possible loss of network connectivity, the potential risk due to critical load lost by impacts of the future event, and/or the like. Any of these risk scores may be used to automatically, semi-automatically, or manually trigger one or more control actions (e.g., via control module 320), which may implement one or more resiliency measures, such as load curtailment, network topology optimization, preemptive electrical islanding, distributed energy resource (DER) dispatch, preemptive hardening, and/or the like. Load curtailment refers to the planned and controlled reduction or interruption of electrical service. Network topology optimization refers to the reconfiguration of the power network (e.g., by rerouting power flow, switching power lines, adjusting substations, etc.) to improve efficiency, reliability, and resilience, while minimizing operational costs. Preemptive electrical islanding refers to the intentional isolation of portions of the power network in advance of the event. DER dispatch refers the process of controlling and optimizing the output of distributed energy resources to ensure efficient, reliable, and cost-effective operations. Pre-emptive hardening refers to the process of making the power network more resilient and resistant to the event in advance of the event. The control action(s) may comprise controlling one or more of the plurality of assets in the power network. For example, examples of control actions include, without limitation, re-dispatching one or more power generators in the power network, curtailing one or more loads in the power network, operating one or more switches in the power network to change a topology of the power network, and/or the like.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are openended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B’s, multiple A’s and one B, or multiple A’s and multiple B’s.

## Claims

**1.** A method of improving resiliency of a power network, the method comprising using at least one hardware processor to:

in advance of a future event, quantify a resiliency of the power network by one or both of

calculating a probabilistic graph-based risk score for the power network based on at least one graph-based metric and a failure probability for at least a first subset of a plurality of assets in the power network, or calculating a probabilistic power-flow-based risk score for the power network based on at least one power-flow-based metric for the power network in each of one or more topology configurations that are determined based on the failure probability of at least a second subset of the plurality of assets in the power network; and

before or during the future event, control one or more of the plurality of assets in the power network to implement one or more resiliency measures based on the quantified resiliency of the power network.

**2.** The method of Claim 1, wherein quantifying the resiliency of the power network includes calculating the probabilistic graph-based risk score, and wherein the at least one graph-based metric is a plurality of graph-based metrics.

**3.** The method of Claim 2, wherein calculating the probabilistic graph-based risk score comprises:

for each asset in the at least a first subset of the plurality of assets,

calculating the plurality of graph-based metrics for the power network for a scenario in which the asset is assumed to fail, and
calculating a risk score for the asset based on the calculated plurality of graph-based metrics for the power network and respective entropy weights for the plurality of graph-based metrics; and

calculating the probabilistic graph-based risk score based on the calculated risk scores for the at least a first subset of the plurality of assets and respective critic weights for the at least a first subset of the plurality of assets, wherein the respective critic weight for each of the at least a first subset of the plurality of assets represents a criticality of that asset.

**4.** The method of Claim 3, wherein the risk score for each asset is calculated as:

$$R_i = \left( \sum_j w_j^e r_{ij} \right) \times P_i^{fail}$$

$$w_j^e = \frac{1 - e_j}{\sum_{j=1}^{n} (1 - e_j)}$$

wherein $R_i$ is the risk score for asset i in the at least a first subset of the plurality of assets, $w_j^e$ is the respective entropy weight for graph-based metric $j$, $r_{ij}$ is a value of the graph-based metric $j$ for asset i, $P_i^{fail}$ is the failure probability for asset $i$, $e_j$ is an entropy for graph-based metric $j$, and $n$ is a total number of the plurality of graph-based metrics, wherein preferably, the failure probability $P_{\alpha_i}^{fail}$ for asset $i$ is determined based on a fragility curve for asset $i$.

**5.** The method of Claim 4, wherein the entropy $e_j$ for graph-based metric $j$ is calculated as:

$$e_j = -\frac{1}{\ln(m)} \sum_{i=1}^{m} \gamma_{ij} \ \ln(\gamma_{ij})$$

$$\gamma_{ij} = \frac{r_{ij}}{\sum_{i=1}^{m} r_{ij}} \quad , \quad \sum_{i=1}^{m} \gamma_{ij} = 1$$

wherein ln() is a natural logarithm, m is a total number of assets in the at least a first subset of the plurality of assets, and $\gamma_{ij}$ is a normalized intensity metric for asset $i$ and graph-based metric $j$.

**6.** The method of any one of Claims 3 through 5, wherein the probabilistic graph-based risk score is calculated as:

$$R_{grid} = \sum_{i}^{m} w_i^{\rho} \times R_i$$

wherein $R_{grid}$ is the probabilistic graph-based risk score, m is a total number of assets in the at least a first subset of the

plurality of assets, $w_i^{\rho}$ is the respective critic weight for asset *i* in the at least a first subset of the plurality of assets, and $R_i$ is the risk score for asset *i.*

**7.** The method of any one of the preceding claims, wherein quantifying the resiliency of the power network includes calculating the probabilistic power-flow-based risk score, and wherein the at least one power-flow-based metric is a plurality of power-flow-based metrics.

**8.** The method of any one of the preceding claims, wherein quantifying the resiliency of the power network includes calculating the probabilistic power-flow-based risk score, and wherein calculating the probabilistic power-flow-based risk score comprises:

determining a graph of the power network, wherein each of the at least a second subset of the plurality of assets is represented as a node or edge in the graph;
generating a plurality of topology configurations from the graph, wherein each of the plurality of topology configurations comprises the graph with at least one node or edge, representing an asset with a failure probability that satisfies one or more criteria, removed;
calculating the at least one power-flow-based metric for each of the plurality of topology configurations; and
calculating the probabilistic power-flow-based risk score based on the at least one power-flow-based metric calculated for the plurality of topology configurations.

**9.** The method of Claim 8, wherein the one or more criteria comprise a threshold; and/or
wherein calculating the at least one power-flow-based metric for each of the plurality of topology configurations comprises:

determining whether or not the topology configuration comprises an electrical island;
when determining that the topology configuration does not comprise any electrical island, calculating the at least one power-flow-based metric for the topology configuration; and
when determining that the topology configuration comprises an electrical island,

determine whether or not the electrical island contains any grid-forming resource,
when determining that the electrical island does not contain any grid-forming resource, calculating the at least one power-flow-based metric for the topology configuration with the electrical island considered as lost, and
when determining that the electrical island contains a grid-forming resource,

when total load in the topology configuration is greater than total power generation, shedding loads until the total load is supported by the total power generation, and
calculating the at least one power-flow-based metric for the topology configuration based on a value of the at least one power-flow-based metric for each of a plurality of sub-graphs of the graph in the topology configuration,

wherein preferably, shedding loads comprises shedding the loads in order from smallest load to largest load.

**10.** The method of any one of the preceding claims, wherein the at least one power-flow-based metric comprises one or more of a loss of load index, critical load not lost, or energy availability index; and/or
wherein each of the at least a first subset and the at least a second subset of the plurality of assets comprises one or both of towers or power lines in the power network.

**11.** The method of any one of the preceding claims, wherein quantifying the resiliency of the power network comprises both calculating the probabilistic graph-based risk score and calculating the probabilistic power-flow-based risk score, wherein preferably, quantifying the resiliency of the power network further comprises calculating an overall risk score based on a combination of the probabilistic graph-based risk score and the probabilistic power-flow-based risk score.

**12.** The method of any one of the preceding claims, wherein controlling the one or more of the plurality of assets comprises one or more of re-dispatching one or more power generators in the power network, curtailing one or more loads in the power network, or operating one or more switches in the power network to change a topology of the power network.

**13.** A system comprising:

at least one hardware processor; and
software configured to, when executed by the at least one hardware processor, perform the method of any one of the preceding claims.

**14.** A computer program comprising instructions that, when executed by a processor, cause the processor to perform the method of any one of Claims 1 through 12.

**15.** A non-transitory computer-readable medium having instructions stored thereon, wherein the instructions, when executed by a processor, cause the processor to perform the method of any one of Claims 1 through 12.

Management System
110
Software
112
Database
114
Network(s)
120
Target System (e.g., Power System)
140
User System
130
Third-Party System
150

FIG. 1

200
Processor 210
Main Memory 215
Secondary Memory 220
Internal Medium 225
Removable Medium 230
I/O Interface 235
Communication Interface 240
255
External System 245
250
Baseband 260
Radio 265
Antenna 270
Communication Bus 205

FIG. 2

Third-Party System 150
140
110
112
Monitoring 310
Control 320
Analysis & Control 330
System Model 350
HMI 340
User System 130

FIG. 3

400
START
410
Receive forecast of future event
420
Quantify resiliency of power network
Calculate probabilistic graph-based risk score
Calculate probabilistic power-flow-based risk score
422
424
Calculate overall risk score
426
430
Control asset(s) to implement resiliency measure(s) based on quantified resiliency
END

FIG. 4

422
Probabilistic Graph-Based Risk Score
$w^p_1$
$w^p_2$
$w^p_M$
Asset-1
Risk-1
Failure Probability-1
Composite-1
$w^e_1$
$w^e_2$
$w^e_N$
Metric-1
Metric-2
Metric-N
Asset-2
Risk-2
Failure Probability-2
Composite-2
$w^e_1$
$w^e_2$
$w^e_N$
Metric-1
Metric-2
Metric-N
Asset-M
Risk-M
Failure Probability-M
Composite-M
$w^e_1$
$w^e_2$
$w^e_N$
Metric-1
Metric-2
Metric-N

FIG. 5

424
START
605
Determine graph of power network
610
Generate topology configurations from the graph
615
Another topology configuration?
No
655
Calculate power-flow-based risk score for power network based on power-flow-based metric(s) calculated for topology configurations
END
Yes
620
Electrical island?
No
625
Calculate power-flow-based metric(s)
Yes
630
Grid-forming resource?
No
Calculate power-flow-based metric(s) with electrical island considered as lost
635
Yes
640
Load > generation?
No
Yes
645
Shed load(s) until load ≤ generation
650
Calculate power-flow-based metric(s) based on power-flow-based metric(s) for each sub-graph
No

**FIG. 6**

Europäisches Patentamt
European Patent Office
Office européen des brevets

# EUROPEAN SEARCH REPORT

Application Number
EP 25 17 1810

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X<br>A | CN 113 762 748 B (UNIV TSINGHUA) 5 November 2024 (2024-11-05)<br>* abstract *<br>* paragraphs [0001], [0009], [0012] - [0014], [0015], [0016] - [0018], [0032], [0037], [0038], [0041], [0140] - [0143], [0150] *<br>* claims 1,2 *<br>----- | 1,2,7-15<br>3-6 | INV.<br>H02J13/00<br>H02J3/00 |
| A | WANG ZHIQIANG ET AL: "Fast assessment method of power outage risks caused by extreme cold disasters based on probabilistic graph model", JOURNAL OF PHYSICS: CONFERENCE SERIES, IOP PUBLISHING, BRISTOL, GB, vol. 2474, no. 1, 1 April 2023 (2023-04-01), XP020449458, ISSN: 1742-6588, DOI: 10.1088/1742-6596/2474/1/012068 [retrieved on 2023-04-01]<br>* abstract *<br>* figures 1,3 *<br>----- | 1-15 | |
| | | | TECHNICAL FIELDS SEARCHED (IPC) |
| | | | H02J |

1

The present search report has been drawn up for all claims

| Place of search | Date of completion of the search | Examiner |
|---|---|---|
| Munich | 13 October 2025 | Zettler, Karl-Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 17 1810

This annex lists the patent family members relating to the patent documents cited in the above-mentioned European search report. The members are as contained in the European Patent Office EDP file on
The European Patent Office is in no way liable for these particulars which are merely given for the purpose of information.

13-10-2025

| Patent document cited in search report | Publication date | Patent family member(s) | Publication date |
|---|---|---|---|
| CN 113762748 B | 05-11-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **E. HOSSAIN et al.** Metrics and enhancement strategies for grid resilience and reliability during natural disasters. *Applied Energy*, 2021, vol. 290
- **PANTELI et al.** Power system resilience to extreme weather: Fragility modeling, probabilistic impact assessment, and adaptation measures. *IEEE Transactions on Power Systems*, 2017, vol. 32 (5), 3747-3757
- **I. MUKHAMETZYANOV**. Specific character of objective methods for determining weights of criteria in mcdm problems: Entropy, CRITIC and SD. *Decision Making: Applications in Management and Engineering*, June 2021, vol. 4, 76-105
- **D. DIAKOULAKI et al.** Determining objective weights in multiple criteria problems: The critic method. *Computers & Operations Research*, 1995, vol. 22 (7), 763-770